# EUROPÄISCHE PATENTANMELDUNG

(11) **EP 3 367 231 A1**
(43) Veröffentlichungstag der Anmeldung: **29.08.2018**
(21) Anmeldenummer: 18154254.9
(22) Anmeldetag: 30.01.2018
(51) Int. Cl.: G06F 3/06, G06F 17/30

(54) **VERFAHREN UND SPEICHERSYSTEM ZUM SPEICHERN VON EINER VIELZAHL VON DATENEINHEITEN**

(30) Priorität: 28.02.2017 DE 102017203239
(71) Anmelder: Siemens Aktiengesellschaft, 80333 München (DE)
(72) Erfinder: Fischer, Jan-Gregor, 85604 Zorneding (DE)

(57) **Zusammenfassung**

Ein Verfahren zum Speichern von Dateneinheiten (21 - 27) aus einer Datenquelle (2) in einer auswählbaren Speichereinrichtung (11 -13) aus einem Speichersystem (1, 51), wobei jeder Dateneinheit (21 - 27) ein Dateneinheitsattribut (41 - 47) und jeder Speichereinrichtung (11 - 13) ein Speicherattribut (31 - 33) zugewiesen wird, umfasst die Schritte: Überprüfen und Anpassen (S2) der Dateneinheitsattribute (41 - 47) zu vorgegeben Zeitpunkten während eines Betriebs der Speichereinrichtungen (11 -13); Auswerten (S3) der Dateneinheitsattribute (41 - 47) und der Speicherattribute (31 - 33) zum Erzeugen von Speichersystemzustandsdaten (52, 53); und für jede Dateneinheit (21 - 27), Auswählen (S4) einer Speichereinrichtung (11 -13) in Abhängigkeit von den zugewiesenen Dateneinheitsattributen (41 - 47), zumindest einer Auswahl der Speicherattribute (31 - 33) und der Speichersystemzustandsdaten (52, 53) und Speichern (S5) der jeweiligen Dateneinheit (21 - 27) in der ausgewählten Speichereinrichtung (11 -13); wobei die Dateneinheitsattribute (41 - 47) und/oder Speicherattribute (31 - 33) Informationen über ein Auswählen und Speichern von Dateneinheiten (21 - 27) zu vorherigen Zeiten umfasst.

## Beschreibung

Die vorliegende Erfindung betrifft ein Verfahren und ein Speichersystem zum Speichern von einer Vielzahl von Dateneinheiten, und ein Computerprogrammprodukt zum Durchführen des Verfahrens.

Die Speicherung großer Datenmengen wird heutzutage insbesondere in der industriellen Anwendung benötigt. Beispielsweise umfasst ein Überwachungssystem, das eine Qualität eines hergestellten Produkts überwacht, mehrere Sensoren, die eine große Menge an zu speichernde Daten oder Dateneinheiten erzeugen. Diese Daten sollen möglichst derart optimal gespeichert werden, sodass ein Zugriff auf Daten schnell und auf sichere Weise erfolgen kann. Zugleich sollten die Daten hinsichtlich der Speicherkosten aufwandsgünstig gespeichert werden.

Das Dokument J. Seeger et al, "DB2 V10.1 Multi-temperature Data Management Recommendations", IBM, April 2012, beschreibt eine temperaturbasierte Speicherung von Daten in Speichereinrichtungen mit unterschiedlichen Qualitätseigenschaften. Bei solch einer temperaturbasierten Speicherung werden die Daten je nach Alter in verschiedene Temperaturklassen eingestuft. Beispielsweise werden junge Daten, also Daten die erst vor kurzem erzeugt wurden, als "heiße" Daten eingestuft und alte Daten, also Daten die vor längerer Zeit erzeugt wurden, als "kalte" Daten eingestuft. Bei der temperaturbasierten Datenspeicherung wird davon ausgegangen, dass häufiger auf heiße Daten als auf kalte Daten zugegriffen wird. Heiße Daten werden deswegen auf besonders leistungsfähige und zuverlässige Datenspeicher gespeichert, während die kalten Daten auf leistungsniedrigere und kostengünstigere Datenspeicher gespeichert werden.

Vor diesem Hintergrund besteht eine Aufgabe der vorliegenden Erfindung darin, ein verbessertes Verfahren zur Speicherung von Dateneinheiten in unterschiedliche Speichereinrichtungen zu schaffen.

Eine weitere Aufgabe besteht darin, ein Computerprogrammprodukt zum Durchführen des Verfahrens zum Speichern von einer Vielzahl von Dateneinheiten und ein Speichersystem zu schaffen.

Demgemäß wird ein Verfahren zum Speichern von einer Vielzahl von Dateneinheiten aus einer Datenquelle oder aus mehreren Datenquellen in einer auswählbaren Speichereinrichtung aus einem Speichersystem von verschiedenen Speichereinrichtungen vorgeschlagen, wobei jeder Dateneinheit mindestens ein Dateneinheitsattribut und jeder Speichereinrichtung mindestens ein Speicherattribut zugewiesen wird. Das Verfahren umfasst:
Überprüfen und Anpassen der Dateneinheitsattribute zu vorgegeben Zeitpunkten oder kontinuierlich während eines Betriebs der Speichereinrichtungen;
Auswerten der Dateneinheitsattribute und der Speicherattribute zum Erzeugen von Speichersystemzustandsdaten; und
für jede Dateneinheit, Auswählen einer Speichereinrichtung in Abhängigkeit von den zugewiesenen Dateneinheitsattributen, zumindest einer Auswahl der Speicherattribute und der Speichersystemzustandsdaten und Speichern der jeweiligen Dateneinheit in der ausgewählten Speichereinrichtung;
wobei die Dateneinheitsattribute und/oder Speicherattribute Informationen über ein Auswählen und Speichern von Dateneinheiten zu vorherigen Zeiten umfasst.

Gemäß einer Ausführungsform wird ein Speichersystem mit verschiedenen Speichereinrichtungen vorgeschlagen, das dazu eingerichtet ist, eine Vielzahl von Dateneinheiten aus einer Datenquelle oder aus mehreren Datenquellen in einer auswählbaren Speichereinrichtung aus den verschiedenen Speichereinrichtungen zu speichern, wobei jeder Dateneinheit mindestens ein Dateneinheitsattribut und jeder Speichereinrichtung mindestens ein Speicherattribut zugewiesen ist. Das Speichersystem umfasst:
eine Bearbeitungseinrichtung, die dazu eingerichtet ist, zu vorgegeben Zeitpunkten oder kontinuierlich während eines Betriebs der Speichereinrichtungen die Dateneinheitsattribute zu überprüfen und anzupassen;
eine Auswertungseinrichtung, die dazu eingerichtet ist, die Dateneinheitsattribute und die Speicherattribute auszuwerten und Speichersystemzustandsdaten zu erzeugen; und
eine Auswahleinrichtung, die für jede Dateneinheit in Abhängigkeit von den zugewiesenen Dateneinheitsattributen, zumindest einer Auswahl der Speicherattribute und der Speichersystemzustandsdaten eine Speichereinrichtung auswählt und die jeweilige Dateneinheit in der ausgewählten Speichereinrichtung speichert;
wobei die Dateneinheitsattribute und/oder Speicherattribute Informationen über ein Auswählen und Speichern von Dateneinheiten zu vorherigen Zeiten umfasst.

Gemäß einer weiteren Ausführungsform ist das Speichersystem dazu eingerichtet, dass es das zuvor und im folgenden beschriebene Verfahren durchzuführt.

Die Datenquelle und das Speichersystem sind insbesondere Teil eines Automatisierungssystems für industrielle Anwendungen. Die Datenquelle kann einen oder mehrere Sensoren umfassen, die Sensordaten, beispielsweise Temperatur, Feuchtigkeit oder Druck, als Dateneinheiten erfassen bzw. generieren und einmalig oder wiederholt an das Speichersystem ausgeben. Die Datenquelle kann auch ein Produktionsleitsystem, ein Produktlebenszyklusmanagementsystem, ein SAP-System, eine SAP-Datenbank sowie Information von internen und/oder externen Diensten, beispielsweise von einer Wettervorhersageplattform, sein. Die Dateneinheiten können Bild-, Ton- oder Textdaten umfassen. Die Dateneinheiten können als Tabellen aufgebaut sein. Eine Dateneinheit verkörpert beispielsweise physikalisch oder elektrisch erfassbar eine Information als Datum. Man kann sagen, dass die Dateneinheit als Datenpaket verkörpert ist.

Das Dateneinheitsattribut, das jeder Dateneinheit zugewiesen wird, umfasst beispielsweise Eigenschaften, die spezifisch für die Dateneinheit sind und/oder Informationen zur Identifizierung der Dateneinheit umfassen. Das Dateneinheitsattribut kann zum Beispiel ein Alter der Dateneinheit, eine Größe der Dateneinheit und/oder eine Häufigkeit eines Zugriffs auf die Dateneinheit angeben.

Unter Speichereinrichtungen werden Speichertechnologien im Allgemeinen verstanden. Diese können sowohl Speichergeräte wie RAM-Disk, Solid-State-Disk, Festplatten (HDD) oder Bandspeichergeräte, als auch Dienste zur Datenspeicherung wie Data-Warehouse, Hadoop-Systeme, RDF-Triple Store, Cloud-Speicherressourcen, Domain-Server oder netzgebundene Speicher (NAS-Speicher) umfassen. Die technischen Speichereinrichtungen unterscheiden sich voneinander insbesondere durch Qualitäts- und Kosteneigenschaften.

Diese speicherspezifischen Eigenschaften können jeder Speichereinheit als das Speicherattribut zugewiesen werden. Diese Eigenschaften umfassen zum Beispiel die Speicherkapazität der Speichereinrichtung, die eine maximale bzw. ursprüngliche in der Speichereinrichtung speicherbare Datenmenge angibt, eine Datenübertragungsrate, die eine Datenmenge angibt, auf die in einem bestimmten Zeitintervall zugegriffen werden kann, und/oder eine Zuverlässigkeit, die eine Fähigkeit angibt, über einen bestimmten Zeitraum unter bestimmten Bedingungen korrekt zu arbeiten. Ferner kann die Eigenschaft bzw. das Speicherattribut Informationen über die IT-Sicherheit der Speichereirichtung, und/oder über Speicherkosten, die Kosten einer Speicherung in der Speichereinrichtung angeben umfassen.

Die vorgegebenen Zeitpunkte sind beispielsweise durch Uhrzeiten und/oder, wie weiter unten erläutert, durch ein Auftreten eines vorgegebenen Ereignisses in Zusammenhang mit dem Speichersystem vorgegeben. Beispielsweise kann bestimmt werden, dass ein vorgegebener Zeitpunkt vorliegt, wenn eine der Speichereinrichtungen zu einen bestimmten Wert, beispielsweise 80%, ausgelastet ist.

Der Betrieb der Speichereinrichtungen gibt insbesondere einen Zustand an, während dem Dateneinheiten in die Speichereinrichtungen des Speichersystems gespeichert werden, und/oder in dem auf die in den Speichereinrichtungen gespeicherten Daten zugegriffen wird. "Im Betrieb" kann bedeuten, dass Daten, bzw. entsprechende Informationen, abrufbar, insbesondere elektronisch, vorgehalten werden. Dies kann in der Art von Speicherzellen geschehen.

Durch das Überprüfen und Anpassen der Dateneinheitsattribute zu den vorgegeben Zeitpunkten und/oder Ereignissen können sowohl die Dateneinheitsattribute von zu speichernden Dateneinheiten, als auch die Dateneinheitsattribute von bereits gespeicherten Dateneinheiten betroffen sein. Zum Beispiel kann die Zugriffshäufigkeit einer bestimmten bereits gespeicherten Dateneinheit erhöht werden, wenn beabsichtigt wird, diese Dateneinheit zukünftig häufiger abzurufen.

Die Dateneinheitsattribute können während des Betriebs der Speichereinrichtungen andauernd aktualisiert werden, insbesondere um einen Speicherzustand der jeweiligen Dateneinheiten zu verfolgen.

Speichersystemzustandsdaten können einen Zustand des gesamten Speichersystems, beispielsweise eine Systemauslastung, aber auch einen Energieverbrauch, eine geografische Verteilung von Speichereinrichtungen oder dergleichen, angeben.

Für jede Dateneinheit, insbesondere für alle Dateneinheiten, wird eine Speichereinrichtung aus dem Speichersystem ausgewählt. Insbesondere wird für jede zu speichernden Dateneinheiten, zum Beispiel für Dateneinheiten, die gerade von der Datenquelle empfangen wurden und noch nicht in dem Speichersystem gespeichert wurde, die entsprechende Speichereinrichtung zum Speichern der Dateneinheit ausgewählt.

Auch für bereits in einer aktuellen Speichereinrichtung gespeicherte Dateneinheiten kann unter Berücksichtigung aktueller Dateneinheitsattribute, Speicherattribute und Speichersystemzustandsdaten eine neue Speichereinheit ausgewählt werden. Wenn diese neue Speichereinrichtung nicht mit der aktuellen Speichereinrichtung übereinstimmt, kann ein Umspeichern bzw. eine Reallokation der Dateneinheit stattfinden. Gemäß einer weiteren Ausführungsform umfasst das Verfahren somit ein Umspeichern einer Dateneinheit von der ausgewählten Speichereinrichtung in eine neue ausgewählte Speichereinrichtung. Das Umspeichern einer Dateneinheit von der ausgewählten Speichereinrichtung in die neue ausgewählte Speichereinrichtung umfasst hier ein vorläufiges Kopieren der Dateneinheit aus der ausgewählten Speichereinrichtung in die neue ausgewählte Speichereinrichtung, und ein anschließendes Löschen der Dateneinheit aus der ausgewählten Speichereinrichtung. Ein Speicherplatz der ausgewählten Speichereinrichtung, der durch Löschen der Dateneinheit frei geworden ist, kann anschließend zum Speichern weiterer Dateneinheiten verwendet werden.

Die Auswahl der Speichereinrichtung entspricht also insbesondere einer Entscheidung über eine Allokation bzw. Reallokation der jeweiligen Dateneinheiten.

Das Auswählen, insbesondere mithilfe der Auswertungseinrichtung, erfolgt beispielsweise Anhand eines Algorithmus, der die Dateneinheitsattribute, zumindest eine Auswahl der Speicherattribute, und die Speichersystemzustandsdaten verarbeitet. Als Algorithmen können maschinelle Lernverfahren, beispielsweise neuronale Netze oder eine Regressionsanalyse, verwendet werden. Diese werden weiter unten beschrieben.

Zumindest ein Teil der Dateneinheitsattribute und/oder Speicherattribute umfasst Informationen über ein Auswählen und Speichern von Dateneinheiten zu vorherigen Zeiten. Vorherige Zeiten sind hier Zeiten, die früher als eine aktuelle Zeit sind. Beispielsweise können die Dateneinheitsattribute eine Historie der Dateneinheit umfassen. Die Informationen über ein Auswählen und Speichern von Dateneinheiten zu vorherigen Zeiten können mittelbar aus Dateneinheitsattribute und/oder Speicherattribute von vorherigen Zeiten abgeleitet werden, oder beispielsweise durch Mustererkennungen oder neuronale Netze angelernt worden sein.

Insbesondere wird für jede Dateneinheit diejenige Speichereinrichtung ausgewählt, die im Hinblick auf die Dateneinheitsattribute, insbesondere im Hinblick auf die Zugriffshäufigkeit, als optimale Speichereinrichtung bestimmt wird.

Dadurch, dass das vorgeschlagene Verfahren sowohl aktuelle als auch vergangene Speichereigenschaften (Speicherattribute), Dateneigenschaften (Dateneinheitsattribute) und Systemeigenschaften (Systemzustandsdaten) berücksichtigt, wird eine optimierte anwendungsspezifische Datenspeicherung ermöglicht. Die Dateneinheiten können insbesondere derart gespeichert werden, dass ein schneller Zugriff auf benötigte Dateneinheiten erfolgen kann. Zugleich werden die Speicherkosten optimiert, weil vermieden werden kann, dass unnötig viele Dateneinheiten in teuren Speichereinrichtungen gespeichert werden.

Gemäß einer weiteren Ausführungsform ist ein Zeitintervall zwischen aufeinanderfolgenden vorgegebenen Zeitpunkten zum Überprüfen und Anpassen der Dateneinheitsattribute konstant und/oder durch ein vorgegebenes Ereignis bestimmt, das durch einen vorgegebenen Speicherbetriebszustand des Speichersystems definiert ist.

Wenn das Zeitintervall zwischen aufeinanderfolgenden vorgegebenen Zeitpunkten konstant ist, erfolgt das Überprüfen und Anpassen der Dateneinheitsattribute periodisch, beispielsweise jede Stunde.

Das vorgegebene Ereignis ist ein Auslösungsereignis, das ein Überprüfen und Anpassen der Dateneinheitsattribute mit sich bringt. Beispiele eines Auslösungsereignisses wären ein Überschreiten einer vorbestimmten Auslastung einer Speichereinrichtung, ein Erhalten einer Dateneinheit von einer vorbestimmten Datenquelle, und/oder ein Wechsel des Benutzers, der auf die gespeicherten Dateneinheiten zugreift.

Gemäß einer weiteren Ausführungsform umfasst das der Dateneinheit zugewiesene Dateneinheitsattribut zumindest eines der folgenden Attribute:
einen Dateneinheitgenerierungszeitpunkt, zu dem die Dateneinheit generiert wurde,
eine Häufigkeit eines Zugriffs auf die Dateneinheit über einen vorbestimmten Zeitraum,
einen aktuellen und/oder vorherigen Speicherort der Dateneinheit,
einen aktuellen und/oder vorherigen auf die Dateneinheit zugreifenden Benutzer; oder
eine aktuelle und/oder vorherige Einstufung in eine von mehreren vorbestimmten Temperaturklassen für die Dateneinheit.

Der Dateneinheit kann bei ihrer Generierung oder bei ihrem Empfang in dem Speichersystem ein (vorläufiges) Dateneinheitsattribut zugewiesen werden, welches beispielsweise den Dateneinheitgenerierungszeitpunkt umfasst. Zusätzlich kann der Dateneinheit auch einen Dateneinheitgenerierungsort, der einen Generierungsort bzw. eine Generierungsquelle der Dateneinheit angibt, als ein Dateneinheitsattribut zugewiesen werden.

Darauf aufbauend oder unabhängig davon kann bei dem Überprüfen und Anpassen der Dateneinheitsattribute zu den vorgegebenen Zeitpunkten eines der aufgelisteten Attribute dem existierenden Dateneinheitsattribut hinzugefügt werden. Das Dateneinheitsattribut kann dadurch eine Historie der Dateneinheit abspiegeln. Das Dateneinheitsattribut kann während des Betriebs der Speichereinrichtungen andauernd aktualisiert werden.

Der aktuelle Speicherort der Dateneinheit gibt die Speichereinrichtung an, in der die Dateneinheit aktuell gespeichert ist. Der vorherige Speicherort der Dateneinheit gibt die Speichereinrichtung oder die Speichereinrichtungen an, in der die Dateneinheit in der Vergangenheit gespeichert war.

Die jeweiligen Dateneinheiten können in mehrere Temperaturklassen eingestuft werden. Temperaturklassen umfassen insbesondere die Klassen "kalt", "warm" und "heiß", und geben eine Priorität der Dateneinheiten an. Die "kalten" Daten können hierbei eine niedrigere Priorität als die "warmen" Daten haben, die wiederum eine niedrigere Priorität als die "heißen" Daten haben. Je nach Temperatur können Dateneinheiten in unterschiedlichen Speichereinrichtungen gespeichert werden. Beispielsweise sind besonders schnelle Speicher dazu geeignet, nur "heiße" Daten zu speichern. Durch solch ein temperaturbasiertes Speichern kann ein schneller Zugriff auf Daten mit hoher Priorität ermöglicht werden, während Daten mit niedrigeren Prioritäten auf langsameren, dafür kostengünstigeren Speichereinheiten gespeichert werden können.

Die Information zu dem aktuellen und/oder vorherigen auf die Dateneinheit zugreifenden Benutzer kann bei der Auswahl der Speichereinrichtung derart verwendet werden, dass Speicher- und Abrufpräferenzen der jeweiligen Benutzer berücksichtigt werden. Auch kann die von einem Benutzer abgerufene Dateneinheit eine Priorität gegeben werden, die einer Wichtigkeit des Benutzers entspricht, und dazu dienen kann, die Dateneinheit in eine der Temperaturklassen einzustufen.

Gemäß einer weiteren Ausführungsform gibt das Dateneinheitsattribut zumindest einen der vorgegebenen Zeitpunkte zum Überprüfen und Anpassen der Dateneinheitsattribute vor. Gemäß einer weiteren Ausführungsform umfasst das der Speichereinrichtung zugewiesene Speicherattribut zumindest eines der folgenden Attribute:
eine Datenübertragungsrate der Speichereinrichtung;
eine Latenzzeit der Speichereinrichtung;
eine Schwankung der Latenzzeit;
einen aktuellen und/oder ursprünglichen in der Speichereinrichtung zur Verfügung stehenden Speicherplatz; oder
eine andere Systemqualität der Speichereinrichtung wie beispielsweise eine Zuverlässigkeit, Verfügbarkeit, Informationssicherheit, Skalierbarkeit, Fehlertoleranz, Robustheit, Administrierbarkeit, Testbarkeit, Kosteninformation, etc;
eine oder mehrere Zusatzfunktionen, die die Speichereinrichtung über das eigentliche Speichern von Informationen anbietet wie beispielsweise eine Funktion zur integrierten Datenanalyse.

Das Speicherattribut kann einem jeweiligen Speicher zugewiesen sein, oder kann mehrmals, insbesondere regelmäßig während des Betriebs der Speichereinrichtungen angepasst werden. Das Speicherattribut gibt insbesondere eine Qualitätseigenschaft des jeweiligen Speichers an.

Insbesondere umfasst das Verfahren gemäß einer weiteren Ausführungsform ein Überprüfen und Anpassen der Speicherattribute zu mehreren Zeitpunkten und/oder Ereignissen während des Betriebs der Speichereinrichtungen.

Gemäß einer weiteren Ausführungsform umfassen die Speichersystemdaten zumindest folgende Daten:
Metadaten zu einer aktuellen und/oder vorherigen Auslastung des Speichersystems;
Metadaten zu dem aktuellen und/oder vorherigen Speichern der Dateneinheiten; und/oder
Metadaten zu dem aktuellen und/oder vorherigen Umspeichern der Dateneinheiten.

Metadaten bezeichnen hier Daten, die Informationen über zumindest einen Teil der Dateneinheitsattribute und/oder Speicherattribute enthalten, ohne die Dateneinheitsattribute und/oder Speichersystemdaten selbst zu enthalten.

Die Metadaten zu der aktuellen und/oder vorherigen Auslastung des Speichersystems geben beispielsweise als ein Prozentwert an, wie viel Speicherplatz in dem gesamten Speichersystem verwendet wird bzw. zu einem Zeitpunkt in der Vergangenheit verwendet wurde.

Die Metadaten zu dem aktuellen und/oder vorherigen Speichern bzw. Umspeichern der Dateneinheiten können eine sogenannte Abbildung der abgespeicherten Dateneinheiten in den jeweiligen Speichereinrichtungen umfassen. Sie können ferner Informationen über Allokations- bzw. Reallokationsentscheidungen, die getroffen wurden, um die Speichereinrichtungen für die jeweiligen Dateneinheiten auszuwählen, enthalten. Ferner können sie Informationen über Ausfälle des Speichersystems enthalten.

Gemäß einer weiteren Ausführungsform erfolgt das Überprüfen und Anpassen der Dateneinheitsattribute zu dem vorgegebenen Zeitpunkt unter Berücksichtigung von zumindest einer Auswahl von früheren Dateneinheitsattributen, Speicherattributen und Speichersystemzustandsdaten.

Insbesondere werden Entscheidungen zur Auswahl der Speichereinheit unter Berücksichtigung auf vorherige Entscheidungen zur Auswahl der Speichereinheit getroffen.

Gemäß einer weiteren Ausführungsform umfasst das Verfahren ferner:
Modellieren eines zukünftigen Speichersystemzustands in Abhängigkeit von den aktuellen und/oder vorherigen zugewiesenen Dateneinheitsattributen, zumindest einer Auswahl der aktuellen und/oder vorherigen Speicherattribute und der aktuellen und/oder vorherigen Speichersystemzustandsdaten.

Insofern werden in Ausführungsformen verbesserte Speichereinheits- und/oder Speicherattribute modelliert und die aktuellen Speichereinheits- und/oder Speicherattribute durch die verbesserten ersetzt.

Eine Planung der Allokations- und Reallokationsschritte kann somit insbesondere unter Berücksichtigung von Randbedingungen mathematisch optimiert werden. Das Modellieren kann insbesondere eine Zuverlässigkeit des Speichersystems erhöhen, weil damit beispielsweise ein Benutzer über einen potentiellen Ausfall des Speichersystems oder über eine komplette Auslastung einer Speichereinheit informiert werden kann.

Gemäß einer weiteren Ausführungsform umfasst das Auswählen der Speichereinrichtung ferner ein Verarbeiten der zugewiesenen Dateneinheitsattribute, zumindest der Auswahl der Speicherattribute und der Speichersystemzustandsdaten mit Hilfe eines Verfahrens, das statistische Modelle, semantische Modelle, Logik- oder regelbasierte Informationssysteme, neuronale Netze, Regressionsmodelle oder Entscheidungsbäume verwendet.

Im Allgemeinen können jegliche Verfahren aus dem maschinellen Lernen verwendet werden, um die Speichereinrichtung auszuwählen. Verzugsweise umfasst das Zuweisen von Attributen und/oder die Auswahl der Speichereinrichtungen die Anwendung eines Verfahrens zum maschinellen Lernens.

Beispielsweise kann eine neuronale Vernetzung anhand vorheriger Dateneinheitsattribute, Speicherattribute und Speichersystemzustandsdaten erstellt oder angelernt werden. Das angelernte neuronale Netz kann daraufhin verwendet werden, um Entscheidungen zur Auswahl der Speichereinrichtung zu treffen.

Mit Hilfe des maschinellen Lernens und der Statistik kann eine antizipierende (Re-)Allokation der Dateneinheiten, sowie eine Trendbildung des Speichersystems und des Benutzerverhaltens ermittelt werde.

Eine Regressionsanalyse kann verwendet werden, um Zusammenhänge zwischen verschiedenen Ereignissen oder zwischen Dateneinheitsattribute, Sensorattribute und Speichersystemzustandsdaten zu bestimmen.

Es können auch Entscheidungsbäume oder regelbasierte Systeme verwendet werden, die aufeinander folgende Entscheidungen zur Auswahl der Speichereinrichtungen darstellen. Insbesondere kann erkannt werden, wie es zu bestimmten Situationen bzw. Entscheidungen gekommen ist, um das Verfahren zu verbessern.

Es können semantisch Modelle und logikbasierte Systeme verwendet werden, die die kausal, temporal oder räumlich logischen Zusammenhänge zur Entscheidung bei der Auswahl der Speichereinrichtungen darstellen.

Es können auch statistische Modelle verwendet werden, die wahrscheinlichkeitsbehaftete Entscheidungen zur Auswahl der Speichereinrichtungen darstellen.

Insbesondere kann auch eine Fehler-Ursachen-Analyse durchgeführt werden, um zu erkennen, welche Ereignisse, insbesondere welche Dateneinheitsattribute und Sensorattribute zu bestimmten Entscheidungen zur Auswahl der Speichereinrichtungen geführt haben.

Der jeweilige Auswahlmechanismus, der zur Auswahl der Speichereinrichtungen verwendet wird, kann andauernd dazulernen und somit andauernd die Entscheidungen zur Auswahl der Speichereinrichtungen verbessern.
Gemäß einer weiteren Ausführungsform umfassen die Speichereinrichtungen RAM-Disk, Solid-State-Disk, Festplatten, Bandspeichergeräte, In-Memory-Datenbanken, Zeitreihen-Datenbanken, Data-Warehouse, relationale, objektorientierte und NoSQL Repositories, Hadoop-Systeme, graphenorientierte Datenbanken, RDF-Triple Store, Cloud-Speicherressourcen, Domain-Server und/oder netzgebundene Speicher.

Das Hadoop-System oder Hadoop-Filesystem, auch Hadoop Distributed File System (HDFS) genannt, ist ein System zur Speicherung sehr großer Datenmengen auf den Dateisystemen mehrerer Rechner (Knoten).

Die In-Memory-Datenbank ist insbesondere ein Datenmanagementsystem, das den Arbeitsspeicher eines Computers als Datenspeicher nutzt. Die Zeitreihen-Datenbank ist ein System, das insbesondere zum Speichern von Zeitreihen geeignet ist. Die graphenorientierte Datenbank kann Graphen benutzen, um stark vernetzte Information darzustellen und abzuspeichern.

Gemäß einer weiteren Ausführungsform wird ein Computerprogrammprodukt mit einem Programm vorgeschlagen, welches auf einer programmgesteuerten Einrichtung die Durchführung des obigen Verfahrens veranlasst. Insbesondere die Bearbeitungseinrichtung, die Auswertungseinrichtung und die Auswahleinrichtung können als programmgesteuerten Einrichtungen implementiert werden.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene Verfahren beschriebenen Ausführungsformen und Merkmale gelten für das vorgeschlagene Speichersystem entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein Speichersystem gemäß einer ersten Ausführungsform;
- Fig. 2: zeigt ein Speichersystem gemäß einer zweiten Ausführungsform; und
- Fig. 3: zeigt einen Ablauf eines Verfahrens zum Speichern von Dateneinheiten gemäß einer ersten Ausführungsform.

In den Figuren sind gleiche oder funktionsgleiche Elemente mit denselben Bezugszeichen versehen worden, sofern nichts anderes angegeben ist.

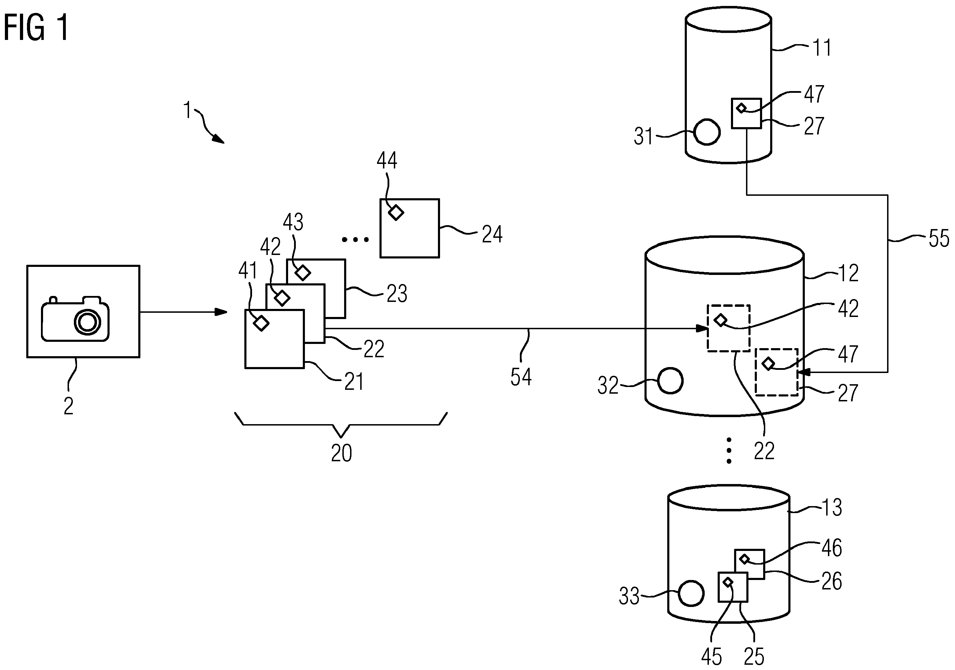

Fig. 1 zeigt ein Speichersystem 1 gemäß einer ersten Ausführungsform. Das Speichersystem 1 ist hier ein aus drei Speichereinrichtungen 11 - 13 zusammengesetztes Speichersystem. Die Speichereinrichtungen 11 - 13 sind dazu eingerichtet, eine Vielzahl 20 von Dateneinheiten 21 -24, die aus einer Datenquelle 2 durch das Speichersystem 1 empfangen werden, zu speichern.

Die Datenquelle 2 ist hier ein Fotoapparat, der zur Überwachung einer industriellen Produktherstellung in regelmäßigen Zeitabständen ein hergestelltes Produkt fotografiert. Man kann den Fotoapparat als eine Sensoreinrichtung auffassen.

Der Fotoapparat erstellt somit die Vielzahl 20 an Bilddaten 21 - 24 als die Dateneinheiten, die als abzuspeichernde Bildeinheiten 21 - 24 an das Speichersystem 1 übertragen werden.

Jeder der abzuspeichernde Bildeinheiten 21 - 24 wird ein Bildattribut 41 - 44 als ein Dateneinheitsattribut zugewiesen. In der Fig. 1 sind die Bildattribute 41 - 44 als Rauten dargestellt. Jedes der Bildattribute 41 - 44 umfasst Informationen über die jeweiligen Bildeinheiten 21 - 24. Die Bildattribute 41 - 44 umfassen hier insbesondere jeweils eine Zeitinformation, zu der die jeweiligen Bildeinheiten 21 - 24 erzeugt wurden, und eine Häufigkeit eines zu erwartenden Zugriffs auf die jeweiligen Bildeinheiten 21 - 24 über einen vorbestimmten Zeitraum, beispielsweise in der nächsten Woche.

Die Speichereinrichtungen 11 - 13 haben unterschiedliche Eigenschaften, insbesondere unterschiedliche Speicherkapazitäten, Zugriffsgeschwindigkeiten und Datenübertragungsraten. In der Ausführungsform des Speichersystems 1, das in der Fig. 1 dargestellt ist, ist die Speichereinrichtung 11 ein Hadoop-System, das von dem Hersteller Apache Software Foundation entwickelt wird, und mehrere Knoten, die in einem Computercluster (nicht dargestellt) verteilt sind, zum Speichern der Bildeinheiten 21 - 27 aufweist. Bezüglich der Kosten und der Qualität ist das Hadoop-System 11 ausgeglichen.

Die Speichereinrichtung 12 ist hier ein sehr teures, aber sehr schnelles In-Memory-Datenbanksystem (IMDB). In dieser Ausführungsform werden Bildeinheiten, die eine hohe Wichtigkeit bzw. Priorität haben, meistens in die IMDB 12 gespeichert.

Zudem ist die Speichereinrichtung 13 hier ein kostengünstiges und sehr langsames Cloud-basiertes Archievierungssystem. Bildeinheiten mit einer sehr niedrigen Priorität werden meistens in der Speichereinrichtung 13 gespeichert.

Insgesamt stellt die Speichereinrichtung 12 ein schnelleres und teureres Speichern der Bildeinheiten 21 - 27 als die Speichereinrichtung 11 bereit, die wiederum ein schnelleres und teureres Speichern der Bildeinheiten 21 - 27 als die Speichereinrichtung 13 bereitstellt.

Jeder Speichereinheit 11 - 13 ist ein Speicherattribut 31 - 33 zugewiesen. In der Fig. 1 sind die Speicherattribute 31 - 33 als Kreise dargestellt. Jedes Speicherattribut 31 - 33 enthält Informationen, die die jeweiligen Speichereinheiten 11 - 13 beschreiben. Beispielsweise enthält jedes Speicherattribut 31 - 33 die Datenübertragungsrate und die Speicherkapazität der jeweiligen Speichereinheit. Zudem enthält jedes Speicherattribut 31 - 33 sowohl einen aktuellen in der jeweiligen Speichereinheit 11 - 13 zur Verfügung stehenden Speicherplatz, als auch einen in der Vergangenheit in dem jeweiligen Speichereinheiten 11 - 13 zur Verfügung stehenden Speicherplatz.

In den Speichereinheiten 11 und 13 sind bereits Dateneinheiten 25 - 27 abgespeichert. Diese gespeicherten Dateneinheiten 25 - 27 sind hier Bildeinheiten, die durch den Fotoapparat 2 erzeugt wurden. Alternativ könnten die gespeicherten Dateneinheiten 25 - 27 auch Dateneinheiten sein, die durch eine andere Datenquelle, beispielsweise durch einen Temperatursensor, erzeugt wurde. Jede der gespeicherten Bildeinheiten 25 - 27 umfasst ein Bildattribut 45 - 47, das durch eine Raute dargestellt ist. Die Bildattribute 45 - 47 umfassen ähnliche Informationen, wie die Bildattribute 41 - 44.

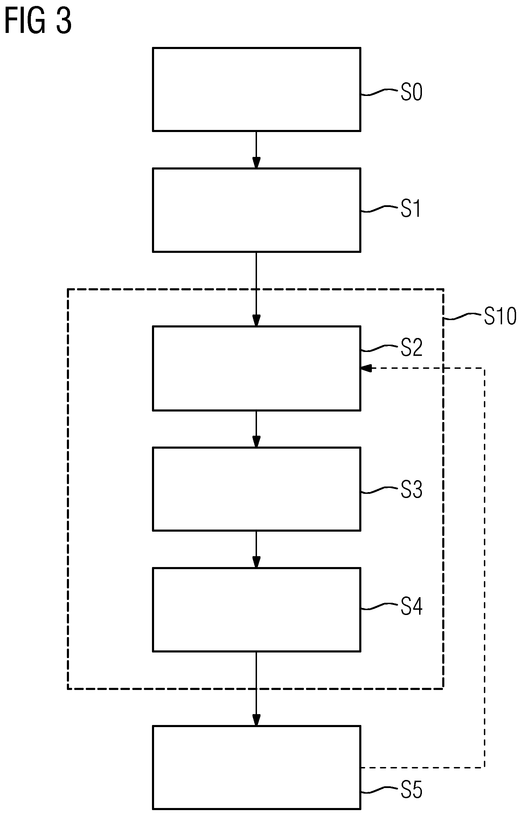

Das in der Fig. 1 dargestellte Speichersystem 1 ist insbesondere derart eingerichtet, dass es ein Verfahren zum Speichern der Vielzahl 20 von Bildeinheiten 21 - 24 durchführen kann. Solch ein Verfahren ist beispielsweise in der Fig. 3 dargestellt, welche einen Ablauf eines Verfahrens zum Speichern von Dateneinheiten gemäß einer ersten Ausführungsform zeigt. Im Folgenden wird eine Implementierung des Verfahrens aus der Fig. 3 mit dem Speichersystem 1 der Fig. 1 beschrieben.

In einem Vorbereitungsschritt S0 werden die Speichereinheiten 11 - 13 mit zugeordneten Speicherattributen 31 - 33 als Teil des Speichersystems 1 bereitgestellt. In einem Schritt S1 werden die Bildeinheiten 21 - 24 mit zugeordneten Bildattributen 41 - 44 durch den Fotoapparat 2 bereitgestellt und durch das Speichersystem 1 empfangen.

Zu einem vorgegebenen Zeitpunkt, zu dem beispielsweise das Speichersystem 1 die Bildeinheit 21 empfängt, werden in einem Schritt S2 die Bildattribute 41 - 47 überprüft und angepasst. Beispielsweise wird die Häufigkeit des Zugriffs auf die jeweiligen Bildeinheiten 21 - 24 über den vorbestimmten Zeitraum angepasst. Das Anpassen kann unter Berücksichtigung von Eingaben eines Benutzers des Speichersystems 1 erfolgen. Zusätzlich oder alternativ kann das Anpassen auf Basis eines vorgegebenen oder durch das Speichersystem 1 erstellten Modells erfolgen. In dem Speichersystem 1 der Fig. 1 wird insbesondere das Bildattribut 47, das der Bildeinheit 27 zugewiesen ist, angepasst. In der ersten Ausführungsform des Speichersystemsl wird die Zugriffshäufigkeit der Bildeinheit 27 erhöht, sodass die Priorität der Bildeinheit 27 sehr hoch ist.

In einem Schritt S3 werden die aktualisierten Bildattribute 42 - 44 und 45 - 47 und die Speicherattribute 31 - 33 ausgewertet, um Speichersystemzustandsdaten zu erzeugen.

In einem Schritt S4 wählt das Speichersystem 1 für die Bildeinheit 22, die eine besondere hohe Priorität hat, die schnellste Speichereinheit, also die Speichereinheit 12 aus den Speichereinheiten 11 - 13 aus, um darin die Bildeinheit 22 zu speichern. Die Auswahl der Speichereinrichtung 12, in die die Bildeinheit 22 gespeichert werden soll erfolgt unter Berücksichtigung von zumindest dem Bildattribut 42, das der Bildeinheit 22 zugewiesen ist, und einer Auswahl der Speicherattribute 31 - 33.

Der Schritt S4 wird zudem auch für die restlichen Bildeinheiten 21 und 23 - 27 durchgeführt.

Insbesondere wird für die bereits in der Speichereinrichtungll gespeicherte Bildeinheit 47 eine neue, schnellere Speichereinrichtung, nämlich die Speichereinrichtung 12, zum Speichern der Bildeinheit 47 unter Berücksichtigung des aktualisierten Bildattributs 47 ausgewählt.

Nachdem die Speichereinrichtungen 11 - 13 zum Speichern der jeweiligen Bildeinheiten 21 - 27 ausgewählt wird, speichert das Speichersystem 1 in einem Schritt S5 die Bildeinheiten 21 - 27 in den jeweiligen ausgewählten Speichereinrichtungen 11 - 13. Insbesondere wird die Bildeinheit 22 in die ausgewählte schnelle Speichereinrichtung 12 gespeichert. Dieses Speichern ist in der Fig. 1 durch den Pfeil 54 dargestellt. Die in der Speichereinrichtung 12 gespeicherte Bildeinheit 22 ist gestrichelt dargestellt.

Zudem wird die Bildeinheit 27 in die ausgewählten schnellen Speichereinrichtung 12 umgespeichert. Dieses Umspeichern ist in der Fig. 1 durch den Pfeil 55 dargestellt. Die in der Speichereinrichtung 12 gespeicherte Bildeinheit 27 ist gestrichelt dargestellt.

Der Schritt S5 wird zudem auch für die restlichen Bildeinheiten 21 und 23 - 26 durchgeführt (nicht dargestellt). Falls in dem Schritt S4 eine Speichereinrichtung 11 - 13 zum Speichern eines Bildattributs 21 - 27 ausgewählt wird, in dem das Bildattribut 21 - 27 bereits gespeichert ist, erfolgt kein Umspeichern des Bildattributs 21 - 27.

Die Schritte S2 bis S5 werden im Folgenden noch weiter erläutert.

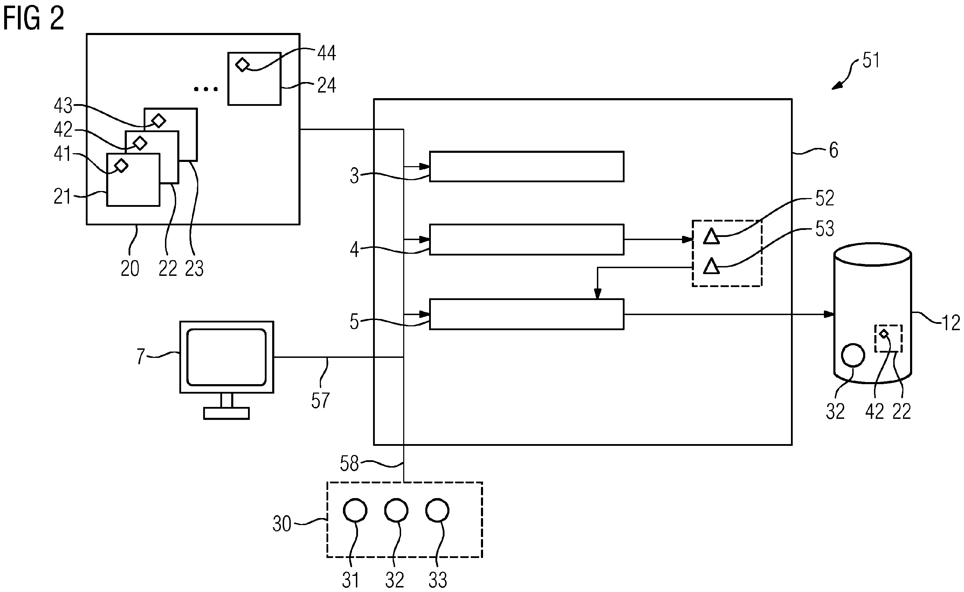

Fig. 2 zeigt ein Speichersystem 51 gemäß einer zweiten Ausführungsform. Das Speichersystem 51 umfasst auch in dieser Ausführungsform die oben beschriebenen unterschiedlichen Speichereinrichtungen 11 - 13, und umfasst zusätzlich ein Entscheidungsmechanismus 6 und eine Benutzerschnittstelle 7.

Die Funktion des Speichersystems 51 ist, mit einigen in Folgenden beschriebenen Ausnahmen, identisch zur Funktion des Speichersystems 1 aus der ersten Ausführungsform. Insbesondere ist das Speichersystem 51 dazu eingerichtet, das in der Fig. 3 beschriebene Verfahren zum Speichern der Vielzahl 20 von Bildeinheiten 21 - 24 durchführen.

In den Vorbereitungsschritten S0 und S1 werden die Speichereinrichtungen 11 - 13 mit den Speicherattributen 31 - 33 sowie die Bildeinheiten 21 - 24 bereitgestellt.

Der Entscheidungsmechanismus 6 ist durch einen Prozessor implementiert, der dazu eingerichtet ist, ein Verfahren, insbesondere ein Computerprogramm, zum Speichern der Bildeinheiten 21 - 24 durchzuführen. Das entsprechende Computerprogramm veranlasst den Prozessor 6, beispielsweise ein Verfahren, wie es in der Fig. 3 gezeigt ist, auszuführen.

Der Prozessor 6 enthält, als Eingangsdaten, die bereitgestellte Vielzahl 20 von Bildeinheiten 21 - 24, die Bildattribute 41 - 44, sowie eine Vielzahl 30 an Speicherattribute 31 - 33.

Der Prozessor 6 implementiert die Bearbeitungseinrichtung 3, die dazu eingerichtet ist, den Schritt S2 durchzuführen, insbesondere die Bildattribute 41 - 44 zu überprüfen und anzupassen. Die Bearbeitungseinrichtung 3 passt die Bildattribute 41 - 44 mit Hilfe eines Modells an, das durch einen Benutzer über die Benutzerschnittstelle 7 an den Prozessor 6, insbesondere an die Bearbeitungseinrichtung 3 kommuniziert wird. Beispielsweise kann ein Simulationsmodell, das eine prognostizierte Zugriffswahrscheinlichkeit in einen bestimmten Folgezeitraum ermittelt, zur Attributanpassung verwendet werden.

Die Benutzerschnittstelle 7 ist hier ein Computer, der über eine Kabelverbindung 57 mit dem Prozessor 6 kommunizieren kann. Der Computer 7 kann durch den Benutzer verwendet werden, um die Bildeinheiten 21 - 24 abzurufen.

Die durch die Bearbeitungseinrichtung 3 aktualisierten Bildattribute 41 - 44 werden über einen internen Bus 58 an die Auswertungseinrichtung 4 des Prozessors 6 übertragen. Die Auswertungseinrichtung 4 enthält, als weitere Eingangsdaten, die Speicherattribute 31 - 33 der Speichereinrichtungen 11 - 13.

Die Speicherattribute 31 - 33 können, bevor sie in die Auswertungseinrichtung eingehen, genauso wie die Bildattribute 41 - 44 auch durch die Bearbeitungseinrichtung überprüft und angepasst werden.

Die Auswertungseinrichtung 3 ist dazu eingerichtet, den Schritt S3 des in der Fig. 3 beschriebenen Verfahrens durchzuführen, insbesondere die aktualisierten Bildattribute 41 - 44 und die Speicherattribute 31 - 33 auszuwerten, um Systemzustandsdaten 52, 53 als Speichersystemzustandsdaten zu generieren.

Die Speichersystemzustandsdaten 52, 53 sind in der Fig. 2 als Dreiecke dargestellt, und umfassen insbesondere einen aktuellen Speicherzustand des gesamten Speichersystems 1, und Informationen über Ausfälle des Speichersystems 1.

Die Auswahleinrichtung 5 ist dazu eingerichtet, die Schritte S4 und S5 durchzuführen, insbesondere eine der Speichereinrichtungen 11 - 13 für jede Dateneinheit 21 - 24 auszuwählen. Die Auswahleinrichtung erhält hierbei als Eingangsdaten die aktualisierten Bildattribute 41 - 44, die Speicherattribute 31 - 33, und die Speichersystemzustandsdaten 52, 53.

Die Auswahleinrichtung 5 trifft eine Entscheidung darüber, in welche Speichereinrichtung 11 - 13 jede Dateneinheit 21 - 24 gespeichert werden soll. Die Entscheidung kann mithilfe eines angelernten neuronalen Netzes erfolgen, das im Folgenden noch erläutert wird.

Für den Fall, dass die Bildeinheiten 21 - 24 zu speichernde Bildeinheiten sind, die gerade von dem nicht dargestellten Fotoapparat 2 empfangen wurden, werden diese in die jeweiligen durch die Auswahleinrichtung 4 ausgewählten Speichereinrichtungen 11 - 13 gespeichert.

Für den Fall, dass die Bildeinheiten 21 - 24 bereits in den Speichereinrichtungen 11 - 13 gespeicherte Bildeinheiten sind, werden die Bildeinheiten 21 - 24 umgespeichert, wenn eine neue Speichereinrichtung 11 - 13 zum Speichern der Bildeinheiten 21 - 24 durch die Auswahleinrichtung 4 ausgewählt wird.

Weitere Aspekte der Fig. 3, die einen Ablauf eines Verfahrens zum Speichern von Dateneinheiten gemäß der ersten Ausführungsform zeigt, werden hier beschrieben.

Die Schritte S0 bis S5 wurden anhand der Ausführungsformen der Fig. 1 und 2 bereits erläutert.

Der gestrichelte Pfeil, der von dem Schritt S5 zum Schritt S2 führt, gibt an, dass die Schritte S2 bis S5 mehrfach wiederholt werden. Nämlich wird zu jedem der vorbestimmten Zeitpunkte, beispielsweise alle fünf Minuten, der Schritt S2 nach dem Schritt S5 wiederholt. Demzufolge werden auch jedes Mal die Schritte S3 bis S5 erneut durchgeführt.

Mehrere Durchläufe eines Schritts S10, der die Schritte S2 bis S4 umfasst, können zum Erlernen eines neuronalen Netzes verwendet werden. Das neuronale Netz lernt insbesondere, welche Entscheidungen zur Auswahl der Speichereinrichtungen 11 - 13 unter welchen Randbedingungen, die durch die Bildattribute 41 - 47, Speichereinheitsattribute 31 - 33 und Systemspeicherzustandsdaten 52, 53 angegeben werden, getroffen werden.

Nach mehreren Durchläufen des Schritts S10 kann das neuronale Netz bereits verwendet werden, um in dem Schritt S4 die Speichereinrichtungen 11 - 13 für jede Bildeinheit 21 - 27 auszuwählen. Das neuronale Netz kann bei jedem zusätzlichen Durchlauf des Schritts S10 dazulernen.

Obwohl die vorliegende Erfindung anhand der obigen Ausführungsbeispielen beschrieben wurde, ist sie vielfältig modifizierbar. Beispielsweise kann eine beliebige Datenquelle zum Erzeugen der Dateneinheiten verwendet werden. Auch das Speichersystem muss nicht die beschriebene Auswahl an Speichereinrichtungen umfassen. Insbesondere ist die Anzahl und Art der Speichereinrichtungen beliebig. Die Dateneinheitsattribute und Speicherattribute können weitere Informationen als Randbedingungen umfassen. Neben dem explizit genannten neuronalen Netz, sind auch andere intelligente Maschinenlernalgorithmen denkbar, um die Speicher(re)allokation zu vollziehen.

## Patentansprüche

1. Verfahren zum Speichern von einer Vielzahl (20) von Dateneinheiten (21 - 27) aus einer Datenquelle (2) in einer auswählbaren Speichereinrichtung (11 -13) aus einem Speichersystem (1, 51) von verschiedenen Speichereinrichtungen (11 -13), wobei jeder Dateneinheit (21 - 27) mindestens ein Dateneinheitsattribut (41 - 47) und jeder Speichereinrichtung (11 - 13) mindestens ein Speicherattribut (31 - 33) zugewiesen wird, umfassend:
Überprüfen und Anpassen (S2) der Dateneinheitsattribute (41 - 47) zu vorgegeben Zeitpunkten während eines Betriebs der Speichereinrichtungen (11 -13);
Auswerten (S3) der Dateneinheitsattribute (41 - 47) und der Speicherattribute (31 - 33) zum Erzeugen von Speichersystemzustandsdaten (52, 53); und
für jede Dateneinheit (21 - 27), Auswählen (S4) einer Speichereinrichtung (11 -13) in Abhängigkeit von den zugewiesenen Dateneinheitsattributen (41 - 47), zumindest einer Auswahl der Speicherattribute (31 - 33) und der Speichersystemzustandsdaten (52, 53) und Speichern (S5) der jeweiligen Dateneinheit (21 - 27) in der ausgewählten Speichereinrichtung (11 -13);
wobei die Dateneinheitsattribute (41 - 47) und/oder Speicherattribute (31 - 33) Informationen über ein Auswählen und Speichern von Dateneinheiten (21 - 27) zu vorherigen Zeiten umfasst.

2. Verfahren nach Anspruch 1, wobei ein Zeitintervall zwischen aufeinanderfolgenden vorgegebenen Zeitpunkten zum Überprüfen und Anpassen der Dateneinheitsattribute (41 - 47) konstant ist und/oder durch ein vorgegebenes Ereignis bestimmt ist, das durch einen vorgegebenen Speicherbetriebszustand des Speichersystems (1, 51) definiert ist.

3. Verfahren nach Anspruch 1 oder 2, ferner umfassend:
Umspeichern einer Dateneinheit (21 - 27) von der ausgewählten Speichereinrichtung (11 -13) in eine neue ausgewählte Speichereinrichtung (11 -13).

4. Verfahren nach einem der Ansprüche 1 bis 3, wobei das der Dateneinheit (21 - 27) zugewiesene Dateneinheitsattribut (41 - 47) zumindest eines der folgenden Attribute umfasst:
einen Dateneinheitgenerierungszeitpunkt, zu dem die Dateneinheit (21 - 27) generiert wurde,
eine Häufigkeit eines Zugriffs auf die Dateneinheit (21 - 27) über einen vorbestimmten Zeitraum,
einen aktuellen und/oder vorherigen Speicherort der Dateneinheit (21 - 27),
einen aktuellen und/oder vorherigen auf die Dateneinheit (21 - 27) zugreifenden Benutzer; oder
eine aktuelle und/oder vorherige Einstufung in eine von mehreren vorbestimmten Temperaturklassen für die Dateneinheit (21 - 27).

5. Verfahren nach einem der Ansprüche 1 bis 4, wobei das Dateneinheitsattribut (41 - 47) zumindest einen der vorgegebenen Zeitpunkte zum Überprüfen und Anpassen der Dateneinheitsattribute (41 - 47) vorgibt.

6. Verfahren nach einem der Ansprüche 1 bis 5, wobei das der Speichereinrichtung (11 -13) zugewiesene Speicherattribut (31 - 33) zumindest eines der folgenden Attribute umfasst:
eine Datenübertragungsrate der Speichereinrichtung (11 - 13) ;
eine Latenzzeit der Speichereinrichtung (11 - 13);
eine Schwankung der Latenzzeit;
einen aktuellen und/oder ursprünglichen in der Speichereinrichtung (11 -13) zur Verfügung stehenden Speicherplatz; oder
eine Zuverlässigkeit der Speichereinrichtung (11 -13).

7. Verfahren nach einem der Ansprüche 1 bis 6, wobei die Speichersystemzustandsdaten zumindest folgende Daten umfassen:
Metadaten zu einer aktuellen und/oder vorherigen Auslastung des Speichersystems (1, 51);
Metadaten zu dem aktuellen und/oder vorherigen Speichern der Dateneinheiten (21 - 27); und/oder
Metadaten zu dem aktuellen und/oder vorherigen Umspeichern der Dateneinheiten (21 - 27).

8. Verfahren nach einem der Ansprüche 1 bis 7, wobei das Überprüfen und Anpassen der Dateneinheitsattribute (41 - 47) zu dem vorgegebenen Zeitpunkt unter Berücksichtigung von zumindest einer Auswahl von früheren Dateneinheitsattributen (41 - 47), Speicherattributen (31 - 33) und Speichersystemzustandsdaten (52, 53) erfolgt.

9. Verfahren nach einem der Ansprüche 1 bis 8, ferner umfassend:
Modellieren eines zukünftigen Speichersystemzustands in Abhängigkeit von den aktuellen und/oder vorherigen zugewiesenen Dateneinheitsattributen (41 - 47), zumindest einer Auswahl der aktuellen und/oder vorherigen Speicherattribute (31 - 33) und der aktuellen und/oder vorherigen Speichersystemzustandsdaten (52, 53).

10. Verfahren nach einem der Ansprüche 1 bis 9, wobei die Datenquelle (2) ein Sensor ist, der einmalig oder wiederholt Sensordaten als Dateneinheiten (21 - 27) generiert.

11. Verfahren nach einem der Ansprüche 1 bis 10, wobei das Auswählen der Speichereinrichtung (11 -13) umfasst:
Verarbeiten der zugewiesenen Dateneinheitsattribute (41 - 47), zumindest der Auswahl der Speicherattribute (31 - 33) und der Speichersystemzustandsdaten (52, 53) mit Hilfe eines Verfahrens, das statistische Modelle, semantische Modelle, Logik- oder regelbasierte Informationssysteme, neuronale Netze, Regressionsmodelle oder Entscheidungsbäume verwendet.

12. Verfahren nach einem der Ansprüche 1 bis 11, wobei die Speichereinrichtungen (11 -13) RAM-Disk, Solid-State-Disk, Festplatten, Bandspeichergeräte, Data-Warehouse, In-Memory-Datenbanken, Zeitreihen-Datenbanken, Data-Warehouse, relationale, objektorientierte und NoSQL Repositories, Hadoop-Systeme, graphenorientierte Datenbanken, RDF-Triple Store, Cloud-Speicherressourcen, Domain-Server und/oder netzgebundene Speicher umfassen.

13. Computerprogrammprodukt mit einem Programm, welches auf einer programmgesteuerten Einrichtung die Durchführung des Verfahrens nach einem der Ansprüche 1 bis 12 veranlasst.

14. Speichersystem (1, 51) mit verschiedenen Speichereinrichtungen (11 -13), das dazu eingerichtet ist, eine Vielzahl von Dateneinheiten (21 - 27) aus einer Datenquelle (2) in einer auswählbaren Speichereinrichtung (11 -13) aus den verschiedenen Speichereinrichtungen (11 -13) zu speichern, wobei jeder Dateneinheit (21 - 27) mindestens ein Dateneinheitsattribut (41 - 47) und jeder Speichereinrichtung (11 -13) mindestens ein Speicherattribut (31 - 33) zugewiesen ist, umfassend:
eine Bearbeitungseinrichtung (3), die dazu eingerichtet ist, zu vorgegeben Zeitpunkten während eines Betriebs der Speichereinrichtungen (11 -13) die Dateneinheitsattribute (41 - 47) zu überprüfen und anzupassen;
eine Auswertungseinrichtung (4), die dazu eingerichtet ist, die Dateneinheitsattribute (41 - 47) und die Speicherattribute (31 - 33) auszuwerten und Speichersystemzustandsdaten (52, 53) zu erzeugen; und
eine Auswahleinrichtung (5), die für jede Dateneinheit (21 - 27) in Abhängigkeit von den zugewiesenen Dateneinheitsattributen (41 - 47), zumindest einer Auswahl der Speicherattribute (31 - 33) und der Speichersystemzustandsdaten (52, 53) eine Speichereinrichtung (11 -13) auswählt und die jeweilige Dateneinheit (21 - 27) in der ausgewählten Speichereinrichtung (11 -13) speichert;
wobei die Dateneinheitsattribute (41 - 47) und/oder Speicherattribute (31 - 33) Informationen über ein Auswählen und Speichern von Dateneinheiten (21 - 27) zu vorherigen Zeiten umfasst.

15. Speichersystem (1, 51) nach Anspruch 14, das dazu eingerichtet ist, derart implementiert zu werden, dass es das Verfahren nach einem der Ansprüche 1 bis 11 durchzuführt.
